# EUROPÄISCHE PATENTSCHRIFT

(11) **EP 4 271 652 B1**
(45) Veröffentlichungstag und Bekanntmachung des Hinweises auf die Patenterteilung: **03.07.2024**
(21) Anmeldenummer: 22840582.5
(22) Anmeldetag: 15.12.2022
(51) Int. Cl.: C01B 3/22, C01B 3/32, C10B 53/02, C10K 3/00

(54) **ANLAGE ZUR ERZEUGUNG EINES SYNTHESEGASES UND VERFAHREN ZUM BETREIBEN DERSELBEN**
PLANT FOR GENERATING A SYNTHESIS GAS AND METHOD FOR OPERATING SAME
INSTALLATION DE PRODUCTION D'UN GAZ DE SYNTHÈSE ET SON PROCÉDÉ DE FONCTIONNEMENT

(30) Priorität: 23.12.2021 DE 102021134442
(43) Veröffentlichungstag der Anmeldung: 08.11.2023
(73) Patentinhaber: Concord Blue Patent GmbH, 40212 Düsseldorf (DE)
(72) Erfinder: THANNHÄUSER, Christopher Frederick, Malibu, California 90265 (US); MAYER, Michael, 44651 Herne (DE); JALILI, Mehran, 40233 Düsseldorf (DE)
(74) Vertreter: Platzöder, Michael Christian
(86) Internationale Anmeldenummer: PCT/EP2022/086232
(87) Internationale Veröffentlichungsnummer: WO 2023/117713

(56) Entgegenhaltungen:
- EP-B1- 1 218 290
- EP-B1- 2 233 551
- DE-C1- 19 755 693
- US-A1- 2004 035 788
- US-B1- 7 077 878

## Beschreibung

Die Erfindung betrifft eine mehrstufige Anlage zur Erzeugung eines Synthesegases aus einem Einsatzstoff, insbesondere aus einem organischen bzw. kohlenstoffhaltigen Einsatzstoff, sowie ein Verfahren zum Betreiben einer solchen Anlage.

Die Erzeugung von Synthesegasen bzw. Prozessgasen aus festen oder flüssigen Einsatzstoffen kann mehrstufig erfolgen. Dabei wird zunächst in einem ersten Prozessschritt der Einsatzstoff pyrolysiert bzw. thermolysiert, wobei der Einsatzstoff in eine Thermolysesubstanz, beispielsweise einen Thermolysekoks, und ein Thermolysegas aufgespalten wird. In einem zweiten Prozessschritt wird das Thermolysegas in einem Reformer bzw. Reformierreaktor mit einem Reformiermedium, beispielsweise Wasserdampf, zusammengeführt und im Zuge einer endothermen Reformierungsreaktion zu dem Synthesegas bzw. zu dem Prozessgas umgesetzt bzw. reformiert. Um die hierfür erforderliche thermische Energie in dem Reformer verfügbar zu machen, kann dieser vor Beginn des Reformierprozesses aufgeheizt bzw. thermisch regeneriert werden. Dies kann beispielsweise mittels einer Beaufschlagung des Reformers mit einem Rauchgas erfolgen. Hierbei kann die thermische Energie in ein in dem Reformer befindliches Wärmeträgermaterial eingespeichert werden, von wo aus sie im Zuge der Reformierung auf die Reaktionsstoffe der Reformierungsreaktion, also auf das Thermolysegas und das Reformiermedium, übertragen werden kann.

Die beschriebene Erzeugung von Synthesegasen ist grundsätzlich bekannt und beispielsweise in der WO 01/23302 A1, der WO 01/02513 A1 und der US 2004/035788 A1 beschrieben.

Das Thermolysegas, das durch die Thermolyse des Einsatzstoffes erzeugt wird, führt in der Regel Verunreinigungen bzw. Materialpartikel mit sich, deren Zusammensetzung und Menge in Abhängigkeit von einer Zusammensetzung des Einsatzstoffes, der zum Beispiel Holz oder Holzabfälle oder andere kohlenstoffhaltige Produkte umfassen kann, und/oder in Abhängigkeit von dem Thermolyseprozess als solchem variieren kann. Diese Materialpartikel können im Zuge des Reformierprozesses auf das im Reformer befindliche Wärmeträgermaterial übertragen werden, was den Wärmeübertrag von dem Wärmeträgermaterial auf die Reaktionsstoffe der Reformierungsreaktion beeinträchtigen kann. In der Folge muss das Wärmeträgermaterial kontinuierlich bzw. quasi-kontinuierlich ausgetauscht werden. Bei Reaktoren, bei denen das Wärmeträgermaterial im Reaktor verbleibt, sog. Festbett-Reaktoren, muss der Betrieb der Anlage häufig für eine Abreinigung und/oder einen technisch hochaufwendigen Austausch des Wärmeträgermaterials unterbrochen werden, was hohe Stillstandzeiten und hohe Instandhaltungskosten für die Anlage nach sich zieht.

Es ist eine Aufgabe der Erfindung, eine Effizienz einer Anlage zur Synthesegaserzeugung zu verbessern, insbesondere wartungsbedingte Stillstandzeiten und damit einhergehende hohe Wartungskosten zu verringern.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der Erfindung betrifft eine Anlage zur Erzeugung eines Synthesegases aus einem Einsatzstoff, insbesondere aus einem organischen bzw. kohlenstoffhaltigen Einsatzstoff.

Die Anlage ist mehrstufig aufgebaut. Sie weist eine erste Reaktorstufe mit zumindest einem Thermolysereaktor auf, der dazu ausgebildet ist, den Einsatzstoff unter Aufspaltung in ein Thermolysegas und eine Thermolysesubstanz, beispielsweise einen Thermolysekoks, thermisch zu zersetzen. Mit anderen Worten ist der Thermolysereaktor derart konstruiert, dass er den Einsatzstoff aufnehmen und durch Zuführung thermischer Energie im Zuge eines Thermolyseprozesses bzw. Pyrolyseprozesses in das Thermolysegas und die Thermolysesubstanz aufspalten kann.

Eine zweite Reaktorstufe der Anlage weist zumindest einen Reformer bzw. Reformierreaktor auf, der zumindest abschnittsweise mit einem Wärmeträgermaterial befüllbar und dazu ausgebildet ist, das Thermolysegas von dem zumindest einen Thermolysereaktor zu empfangen und in einem Reformierbetrieb unter Einsatz einer von dem Wärmeträgermaterial bereitgestellten thermischen Energie mit einem Reformiermedium zu dem Synthesegas umzusetzen.

Mit anderen Worten ist die Anlage derart aufgebaut, dass eine gasleitende Verbindung zwischen der ersten und zweiten Reaktorstufe hergestellt werden kann, um das Thermolysegas aus dem Thermolysereaktor zu dem Reformer zu leiten. Ferner ist die Anlage derart konstruiert und mit den notwendigen Leitungen ausgestattet, dass dem Reformer das Reformiermedium, beispielsweise Wasserdampf, zugeleitet werden kann. Die erforderliche Anlagentechnik, insbesondere die Ausgestaltung der Leitungen und Ventile betreffend, ist dem Fachmann hinlänglich bekannt.

Die für die Reformierungsreaktion erforderliche thermische Energie kann mittels des einfüllbaren Wärmeträgermaterials bereitgestellt werden. Es ist denkbar, die thermische Energie vor einem Befüllen des Reformers in das Wärmeträgermaterial einzuspeichern. Ebenso ist es denkbar, alternativ oder zusätzlich das Wärmeträgermaterial aufzuheizen, wenn es bereits in den Reformer eingefüllt ist. Hierfür kann insbesondere ein Rauchgas, beispielsweise aus einer sekundären Verfeuerung der Thermolysesubstanz, eingesetzt werden. Je nach Zusammensetzung der Reaktionsstoffe, kann es erforderlich sein, den Reformer auf eine Temperatur im Bereich von 800 bis 1100°C aufzuheizen. Die thermische Regenerationsenergie kann dem Reformer zumindest anteilig durch einen externen Brenner und/oder durch ein Rauchgas bzw. Heißgas aus einer sekundären Verfeuerung des Thermolysekokes und/oder aus einer exothermen Reaktion von in den Reformer eingespeisten Reaktionsstoffen zugeführt werden.

In einem in den Reformer eingefüllten Zustand kann das Wärmeträgermaterial von dem Thermolysegas und ggf. weiteren Reaktionsstoffen, beispielsweise von dem Reformiermedium, angeströmt oder umströmt werden und dabei die thermische Energie an die Reaktionsstoffe abgeben. Dabei können in dem Thermolysegas mitgeführte Materialpartikel als Materialablagerungen auf das Wärmeträgermaterial übertragen werden. Mit anderen Worten können die Materialpartikel auf das Wärmeträgermaterial übertragen werden, wo sie dann Materialablagerungen bzw. -krusten bilden.

Im Sinne der vorliegenden Erfindung wird unterschieden zwischen "Materialpartikeln" und "Materialablagerungen". Materialpartikel sind die in dem Thermolysegas, insbesondere frei, mitgeführten Reststoffe aus dem Thermolyseprozess, die vor einer Beaufschlagung des Reformers mit dem Thermolysegas aus diesem nicht abgeschieden wurden. Die Materialpartikel werden also gemeinsam mit dem Thermolysegas in den Reformer eingetragen und können dort abgeschieden werden. Somit kann sich ein loser Staub aus Materialpartikeln am Reformerboden und/oder in Zwischenräumen anhäufen. Die Materialpartikel können alternativ oder zusätzlich auf das Wärmeträgermaterial übertragen werden. Sobald die Materialpartikel auf das Wärmeträgermaterial übertragen wurden, werden sie im Sinne der vorliegenden Erfindung als Materialablagerungen bezeichnet.

Eine Austragsvorrichtung der Anlage ist dazu ausgebildet, die Materialpartikel und/oder die Materialablagerungen im Betrieb aus dem Reformer auszutragen. Mit anderen Worten ermöglicht es die erfindungsgemäße Austragsvorrichtung, den Reformer im laufenden Betrieb von den Materialpartikeln und/oder den Materialablagerungen zu befreien. Das bedeutet, dass die erfindungsgemäße Austragsvorrichtung derart ausgebildet ist, dass durch sie entweder nur die Materialpartikel oder nur die Materialablagerungen (also am Wärmeträgermaterial anhaftende Materialpartikel) oder eine Kombination der beiden im Betrieb aus dem Reformer ausgetragen werden können/kann.

Zudem weist die Anlage eine Separationseinrichtung auf, die dazu ausgebildet ist, zumindest einen Teil der Materialablagerungen innerhalb des Reformers von dem Wärmeträgermaterial zu trennen und als Materialpartikel der Austragsvorrichtung zum Austrag aus dem Reformer bereitzustellen. Mit anderen Worten ist die Separationseinrichtung zumindest abschnittsweise innerhalb des Reformers angeordnet. Die Separationseinrichtung kann ein Rüttelsieb aufweisen, wobei die Materialablagerungen durch eine Bewegung des Wärmeträgermaterials auf dem Rüttelsieb von dem Wärmeträgermaterial abgetrennt werden können. Alternativ oder zusätzlich kann die Separationseinrichtung ein Gebläse aufweisen, mittels dessen sie die Materialablagerungen von dem Wärmeträgermaterial abblasen und/oder absaugen kann. Durch die beschriebene Trennung innerhalb des Reformers ergibt sich der Vorteil, dass das Wärmeträgermaterial gereinigt innerhalb des Reformers verbleiben und dort weiterhin thermische Energie an die Reaktionsstoffe abgeben kann, während die Materialpartikel bzw. -staub aus dem Reformer ausgetragen werden können.

Insgesamt erlaubt die Erfindung eine Abreinigung des Reformers, insbesondere des Wärmeträgermaterials, während des Betriebs des Reformers. Der Betrieb des Reformers kann den beschriebenen Reformierbetrieb und/oder den Regenerierbetrieb, also das thermische Regenerieren des Reformers vor Beginn des Reformierprozesses, umfassen. Durch die Erfindung ergibt sich der Vorteil, dass die Anlage nicht abgestellt oder abgefahren werden muss, um die Reinigung durchzuführen. Dadurch lassen sich in vorteilhafter Weise Stillstandszeiten verringern und damit verbundene Kosten einsparen.

Nachfolgend werden bevorzugte Ausführungsformen der Erfindung und deren Weiterbildungen beschrieben, die jeweils, soweit dies nicht ausdrücklich ausgeschlossen wird, beliebig miteinander sowie mit den im Weiteren beschriebenen Aspekten der Erfindung kombiniert werden können.

In einigen Ausführungsformen kann die Austragsvorrichtung eine Austragsöffnung zum gravitativen Austrag der Materialpartikel und/oder der Materialablagerungen aus dem Reformer aufweisen. Alternativ oder zusätzlich kann die Austragsvorrichtung eine Absaugeinrichtung zum Absaugen der Materialpartikel und/oder Materialablagerungen aus dem Reformer aufweisen. Hierfür kann es insbesondere vorteilhaft sein, das Wärmeträgermaterial nicht als Festbett, sondern zumindest bereichsweise beweglich bzw. als quasi-Festbett oder Wanderbett in dem Reformer anzuordnen. Beispielsweise kann das Wärmeträgermaterial in Form eines Schüttguts bzw. einer Schüttung in dem Reformer angeordnet sein.

Das Wärmeträgermaterial kann aus einem Keramikwerkstoff oder einem Keramikverbundwerkstoff hergestellt sein oder zumindest teilweise aus einem solchen bestehen. Bevorzugt umfasst das Wärmeträgermaterial einzelne Wärmeträgerkomponenten, beispielsweise einzelne Kugeln, die bevorzugt frei beweglich innerhalb des Reformers angeordnet sein können. Besonders bevorzugt weist das Wärmeträgermaterial eine Oberfläche auf, die derart glatt ausgebildet ist und/oder entsprechend behandelt bzw. beschichtet ist, dass die Materialpartikel schlecht an ihr haften bzw. leicht von ihr gelöst werden können.

In einigen Ausführungsformen weist die Separationseinrichtung eine um eine Drehachse drehbare Siebtrommel auf, die dazu ausgebildet ist, zumindest einen Teil des Wärmeträgermaterials aufzunehmen und durch Drehung der Siebtrommel um die Drehachse derart innerhalb der Siebtrommel zu bewegen, dass die Materialablagerungen durch die Bewegung des Wärmeträgermaterials in der Siebtrommel von dem Wärmeträgermaterial getrennt werden und als Materialpartikel durch Sieböffnungen der Siebtrommel hindurch in einen die Siebtrommel zumindest abschnittsweise umgebenden Außenraum überführt werden. Während das abgereinigte Wärmeträgermaterial in der Siebtrommel verbleibt, können die Materialpartikel aus dem Außenraum ausgetragen werden, beispielsweise durch ein Absaugen mittels der oben beschriebenen Absaugeinrichtung der Austragsvorrichtung. In der Siebtrommel können zusätzliche Einbauten vorgesehen sein, die dazu ausgebildet sind, eine Bewegung des Wärmeträgermaterials zu unterstützen und/oder das Thermolysegas in geeigneter Weise durch den Reformer zu führen. Dies können beispielsweise ein Schneckenförderer und/oder radial angeordnete Rippen und/oder Leitbleche innerhalb der Siebtrommel sein.

In einigen Ausführungsformen weist die Anlage eine Fördereinrichtung auf, die dazu ausgebildet ist, zumindest einen Teil der Materialablagerungen gemeinsam mit dem Wärmeträgermaterial der Austragsvorrichtung zum Austrag aus dem Reformer bereitzustellen. Mit anderen Worten kann es vorgesehen sein, nicht das gesamte Wärmeträgermaterial innerhalb des Reformers zu reinigen und lediglich die Materialpartikel auszutragen, sondern zumindest einen Teil des Wärmeträgermaterials in verunreinigtem Zustand, also gemeinsam mit den Materialablagerungen, aus dem Reformer auszutragen. Hierdurch ergibt sich der Vorteil, dass das Wärmeträgermaterial außerhalb des Reformers unter Einsatz von konventionellen Reinigungsmethoden abgereinigt werden kann. Das außerhalb des Reformers gereinigte Wärmeträgermaterial kann wieder in den Reformer zurückgeführt und erneut aufgeheizt werden. Das Aufheizen kann innerhalb und/oder außerhalb des Reformers erfolgen. Die Fördereinrichtung kann einen Schneckenförderer oder ein Gliederkettenband umfassen.

In bevorzugten Weiterbildungen weist die Fördereinrichtung eine Förderstrecke zum Transport zumindest eines Teils des Wärmeträgermaterials entlang eines durch den Reformer verlaufenden Transportpfades für das Wärmeträgermaterial auf, wobei die Anlage dazu ausgebildet ist, das Thermolysegas als Thermolysegasstrom mittels einer Strömungsleiteinheit derart auf die Förderstrecke auszurichten, dass bei dem Transport des Wärmeträgermaterials entlang des Transportpfades die in dem Thermolysegas mitgeführten Materialpartikel auf das Wärmeträgermaterial übertragen werden. Mit anderen Worten ist durch die Förderstrecke ein Transportpfad für das Wärmeträgermaterial innerhalb des Reformers vorgegeben. Der Transportpfad kann einen Innenraum des Reformers durchkreuzen. Der Transportpfad kann in der Art einer Rutsche geneigt sein. Der Transportpfad kann auch entlang von Kurven und/oder Schleifen und/oder zumindest abschnittsweise spiralförmig innerhalb des Reformers verlaufen. Der Transport kann zumindest teilweise gravitativ und/oder zwangsgeführt, beispielsweise durch einen Förderbandantrieb entlang der Förderstrecke erfolgen.

Die Strömungsleiteinheit kann als eine Düse oder ein innerhalb einer Thermolysegaseintrittsöffnung des Reformers angeordnetes und verfahr- und/oder verkippbares Blech ausgestaltet sein.

In einigen Ausführungsformen ist die Strömungsleiteinheit dazu ausgebildet, den Thermolysegasstrom in Abhängigkeit von einer Zusammensetzung des Thermolysegases und/oder von einer Geometrie des Reformers derart einzustellen, insbesondere hinsichtlich seiner Ausrichtung und/oder seines Volumens und/oder seiner Strömungsgeschwindigkeit und/oder seinem Anströmwinkel in Bezug auf die Förderstrecke, dass eine vorbestimmte Menge, insbesondere eine Mindestmenge, der Materialpartikel auf das entlang der Förderstrecke transportierte Wärmeträgermaterial übertragen wird. Bevorzugt ist die Strömungsleiteinheit hierzu ansteuerbar und kann mittels eines Stellsignals angesteuert werden. Alternativ oder zusätzlich kann die Strömungsleiteinheit von außerhalb des Reformers zugänglich sein und manuell eingestellt werden.

In einigen Ausführungsformen weist die Förderstrecke einander dachziegelartig überlappende Segmente zur Strömungsumlenkung des Thermolysegasstroms auf. Diesen Ausführungsformen liegt die Erkenntnis zugrunde, dass ein Wechsel der Strömungsrichtung des Thermolysegasstroms den strömungsdynamischen Effekt erzeugt, dass einige Partikel aufgrund der Trägheitskraft durch die Gasströmung nicht mehr mittransportiert werden können. Größere Materialpartikel werden auf diese Weise abgeschieden. Die Dachziegel- bzw. Schuppenanordnung bewirkt, dass die Materialpartikel aus dem Gasstrom herausgefiltert und auf das auf der Förderstrecke befindliche Wärmeträgermaterial übertragen werden, während der Gasstrom gereinigt die Förderstrecke passieren kann. Dies hat den Vorteil einer besonders effizienten Abscheidung der Materialpartikel aus dem Gasstrom und somit aus dem Reformer.

In einigen Ausführungsformen kann die Anlage mehrere Reformer umfassen, also zwei oder drei oder mehr als drei. Bevorzugt ist jeder der Reformer dazu ausgebildet, in dem beschriebenen Reformierbetrieb und in einem Regenerierbetrieb betrieben zu werden. Insbesondere können einer oder mehrere der Reformer in einem Stand-by Betrieb betrieben und nur dann in den Betrieb der Anlage integriert werden, wenn andere der Reformer wie beschrieben gereinigt werden.

Die Reformer können also in einem Wechselbetrieb in dem Reformierbetrieb und in dem Regenerierbetrieb und optional in dem Stand-by Betrieb betrieben werden, wobei in dem Reformierbetrieb die beschriebene Reformierung des Thermolysegases stattfindet und wobei in dem Regenerierbetrieb der jeweilige Reformer thermisch regeneriert wird. In dem Stand-by Betrieb kann der Reformer komplett oder teilweise abgefahren sein. Insbesondere kann er auf einer Temperatur gehalten werden, die niedriger ist als eine für den Reformierbetrieb erforderliche Temperatur.

In einer konkreten Ausführungsform umfasst die Anlage zumindest drei Reformer, wobei zumindest einer der Reformer als Stand-by-Reformer genutzt wird. Als Stand-by-Reformer ist dieser Reformer nicht in den Wechselbetrieb eingebunden, sondern wird im Stand-by Betrieb betrieben. Erst wenn einer der in den Wechselbetrieb eingebundenen Reformer aufgrund einer zu hohen Staubbeladung oder aus anderen Gründen aus dem Wechselbetrieb der Reaktoren herausgenommen wird, kann der Stand-by-Reformer den Wechselbetrieb aufnehmen oder in diesen eingebunden werden. Bevorzugt kann nach einer Abkühlphase des aus dem Wechselbetrieb ausgeschlossenen Reformers dieser wie beschrieben gereinigt werden. Dann kann dieser gereinigte Reformer als neuer Stand-by-Reformer vorbereitet werden. Für den Fall, dass es sich bei einem oder mehreren oder allen Reformern um Festbett-Reformer handelt, kann zur Reinigung nach der Abkühlphase ein Austausch des Festbetts vorgenommen werden, ohne, dass der Betrieb der Anlage unterbrochen werden muss.

Wie oben beschrieben, ist die Austragsvorrichtung dazu ausgebildet, die Materialpartikel und/oder die Materialablagerungen während des Betriebs aus dem Reformer/aus den Reformern auszutragen. Mit anderen Worten kann der Austrag sowohl aus dem jeweils im Reformierbetrieb, als auch aus dem jeweils im Regenerierbetrieb betriebenen Reformer erfolgen. Durch die zusätzlichen Reformer, insbesondere die Stand-by-Reformer, kann jedoch auch abgewartet werden, bis ein jeweiliger Reformer auf eine vorbestimmte Reinigungstemperatur, beispielsweise 100°C oder 50°C, abgekühlt ist, um dann einen Austrag und eine Reinigung des Wärmeträgermaterials vorzunehmen. Hierdurch ergibt sich der Vorteil, dass die Stillstandszeiten der Anlage noch weiter verringert werden können.

In bevorzugten Weiterbildungen weist die Anlage eine Steuervorrichtung auf, die dazu ausgebildet ist, den Wechselbetrieb zu koordinieren und die Austragsvorrichtung gemäß einem vorbestimmten Reinigungsplan und/oder in Abhängigkeit von zumindest einem Betriebszustand zumindest eines der Reformer anzusteuern und einem der Reformer für dessen Reinigung zuzuweisen. Mit anderen Worten ist eine Steuervorrichtung vorgesehen, die mit den einzelnen Komponenten der Anlage derart signaltechnisch verbunden ist, dass sie Zustandssignale von Medienzuführventilen, Sensoren und/oder Systemen zur Abreinigung des Wärmeträgermaterials empfangen kann. Zu den Sensoren können beispielsweise in der Anlage verteilte Temperatur- und/oder Drucksensoren und/oder Sensoren zur Erfassung einer stofflichen Gaszusammensetzung des Thermolyse- und/oder des Synthesegases gehören. Es ist auch denkbar, dass Sensoren vorgesehen sind, die eine Geschwindigkeit des Thermolysegasstroms und/oder des Synthesegasstroms erfassen und einen Geschwindigkeitsmesswert an die Steuervorrichtung übermitteln können. Die Übermittlung kann dabei drahtgebunden oder zumindest anteilig drahtlos erfolgen.

Die Steuervorrichtung kann dazu ausgebildet sein, aus den übermittelten Sensordaten den Betriebszustand abzuleiten und als Reaktion auf den jeweils aktuell vorliegenden Betriebszustand eines der Reformer für diesen eine Reinigung auszulösen.

Zusätzlich oder alternativ kann die Steuervorrichtung unabhängig von den übermittelten Sensordaten gemäß einem vorbestimmten Reinigungsplan, beispielsweise gemäß regelmäßigen Reinigungsintervallen, einen jeweiligen Reformer für eine Reinigung einteilen.

Die Steuervorrichtung kann die Austragsvorrichtung, beispielsweise die oben genannte Absaugeinrichtung der Austragsvorrichtung, ansteuern und dem zur Reinigung vorgesehenen Reformer für dessen Reinigung zuweisen.

Es ist denkbar, dass die Steuervorrichtung in einen Regelkreis eingebunden ist und nach erfolgter Reinigung Feedbacksignale der jeweiligen Sensoren empfängt und anhand der Feedbacksignale einen Erfolg der Reinigung bewertet. Bei erfolgloser Reinigung kann die Steuervorrichtung den jeweiligen Reformer für eine erneute Reinigung einteilen.

Bevorzugt wird der beschriebene Stand-by-Reformer erst dann in den Wechselbetrieb eingebunden, wenn die Steuervorrichtung zumindest einem der bereits in den Wechselbetrieb eingebundenen Reformer die Austragsvorrichtung für dessen Reinigung zugewiesen hat. Mit anderen Worten kann der Stand-by-Reformer dann in den Wechselbetrieb eingebunden werden, wenn einer der anderen Reformer aufgrund seiner Reinigung und/oder aus anderen Gründen, insbesondere aus Wartungsgründen, zumindest zeitweise aus dem Wechselbetrieb ausscheidet. Der Stand-by-Reformer kann diesen Ausfall eines der Reformer ersetzen bzw. kompensieren.

Ein zweiter Aspekt der Erfindung betrifft ein Verfahren zum Betreiben einer Anlage zur Erzeugung eines Synthesegases aus einem Einsatzstoff gemäß dem ersten Aspekt der Erfindung. Die Anlage weist also eine erste Reaktorstufe mit zumindest einem Thermolysereaktor, eine zweite Reaktorstufe mit zumindest einem Reformer, und eine Austragsvorrichtung auf. Gemäß dem erfindungsgemäßen Verfahren wird in einem ersten Verfahrensschritt in dem Thermolysereaktor der Einsatzstoff unter Aufspaltung in ein Thermolysegas und eine Thermolysesubstanz, beispielsweise einen Thermolysekoks, thermisch zersetzt. In einem weiteren Verfahrensschritt wird der Reformer zumindest abschnittsweise mit einem Wärmeträgermaterial befüllt. In einem weiteren Verfahrensschritt wird in dem Reformer das Thermolysegas von dem zumindest einen Thermolysereaktor empfangen und in einem Reformierbetrieb unter Einsatz einer von dem Wärmeträgermaterial bereitgestellten thermischen Energie mit einem Reformiermedium zu dem Synthesegas umgesetzt. Dabei werden in dem Thermolysegas mitgeführte Materialpartikel auf das Wärmeträgermaterial übertragen, wo sie Materialablagerungen bilden. In einem weiteren Verfahrensschritt, der an beliebiger Stelle des erfindungsgemäßen Verfahrens oder auch parallel zu einem oder mehreren der anderen Verfahrensschritte durchgeführt werden kann, werden durch die Austragsvorrichtung die Materialpartikel und/oder die Materialablagerungen im Betrieb aus dem Reformer ausgetragen.

Die in Bezug auf den ersten Aspekt der Erfindung und dessen vorteilhafte Ausgestaltung beschriebenen Merkmale und Vorteile gelten, zumindest wo technisch sinnvoll, auch für den zweiten Aspekt der Erfindung und dessen vorteilhafte Ausgestaltung sowie umgekehrt.

Weitere Vorteile, Merkmale und Anwendungsmöglichkeiten der vorliegenden Erfindung ergeben sich aus der nachfolgenden Beschreibung in Zusammenhang mit den Figuren, in denen durchgängig dieselben Bezugszeichen für dieselben oder einander entsprechende Elemente der Erfindung verwendet werden. Es zeigen, wenigstens teilweise schematisch:
- **Fig. 1**: eine bevorzugte Ausführungsform einer erfindungsgemäßen Anlage mit beispielhaft zwei Reformern;
- **Fig. 2**: eine bevorzugte Ausführungsform eines Reformers mit einer innerhalb des Reformers angeordneten Separationseinrichtung;
- **Fig. 3**: eine weitere bevorzugte Ausführungsform eines Reformers mit einer streckenweise innerhalb des Reformers verlaufenden Förderstrecke;
- **Fig. 4**: eine Detailansicht eines bevorzugten Aufbaus der Förderstrecke der Fig. 3;
- **Fig. 5**: eine weitere bevorzugte Ausführungsform eines Reformers; und
- **Fig. 6**: eine schematische Darstellung einer Ausführungsform des erfindungsgemäßen Verfahrens.

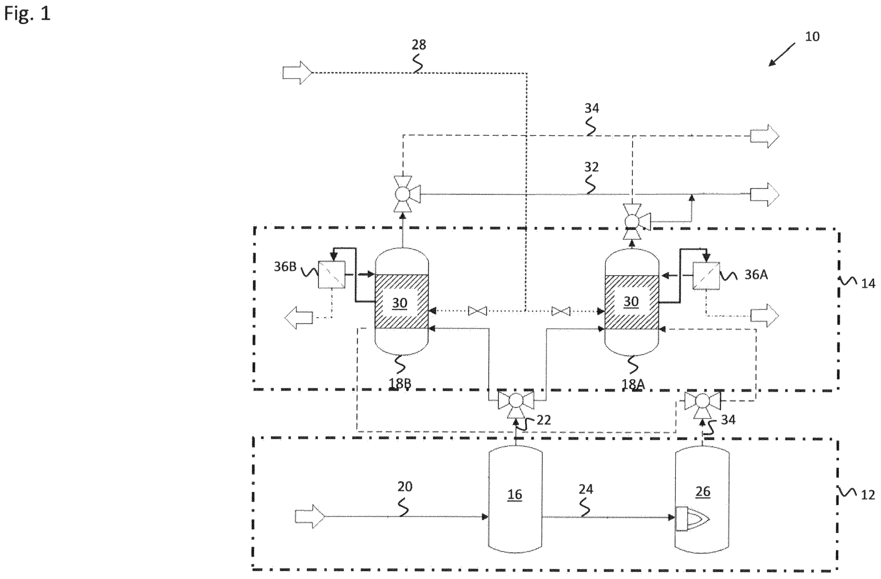

**Fig. 1** zeigt eine bevorzugte Ausführungsform einer erfindungsgemäßen Anlage 10. Die Anlage 10 weist eine erste Reaktorstufe 12 und eine zweite Reaktorstufe 14 auf. In der hier dargestellten Ausführungsform, weist die erste Reaktorstufe 12 einen Thermolysereaktor 16 und die zweite Reaktorstufe 14 zwei Reformer 18A, 18B auf. Es versteht sich, dass lediglich beispielhaft genau ein Thermolysereaktor 16 und genau zwei Reformer 18A, 18B dargestellt sind. Es kann eine davon abweichende Anzahl an Thermolyseraktoren 16 und/oder Reformern 18 vorgesehen sein. Es können auch Gruppen von Thermolysereaktoren 16 und/oder Reformern 18 vorgesehen sein, die synchronisiert oder unabhängig voneinander betrieben werden können. Die Reaktoren 16, 18A, 18B sind in der Anlage 10 durch eine Vielzahl nicht näher bestimmter, gasbeaufschlagbarer Leitungen miteinander verbindbar. Die erforderliche Anlagentechnik ist dem Fachmann hinlänglich bekannt und kann von ihm der Nutzung entsprechend frei gewählt werden.

Der Thermolysereaktor 16 ist dazu ausgebildet, einen Einsatzstoff 20 zu empfangen und unter Aufspaltung in ein Thermolysegas 22 und eine Thermolysesubstanz 24, beispielsweise einen Thermolysekoks 24, thermisch zu zersetzen. Während der Thermolysekoks 24 im hier gezeigten Beispiel zu einem Feuerungsreaktor 26 zur weiteren Verfeuerung geleitet wird, wird das Thermolysegas 22 zu den Reformern 18A, 18B zur weiteren Behandlung geschickt.

In einem jeweiligen Reformer 18A, 18B wird das Thermolysegas 22 mit einem Reformiermedium 28, beispielsweise Wasserdampf oder einem Fluidgemisch mit oder ohne Wasserdampf, beispielsweise Kohlendioxid, versetzt. Unter Einsatz einer thermischen Energie, die von in dem Reformer 18A, 18B eingefülltem Wärmeträgermaterial 30 bereitgestellt wird, wird das Thermolysegas 22 mit dem Reformiermedium 28 zu dem Synthesegas 32 umgesetzt. Im Anschluss wird das Synthesegas 32 im hier gezeigten Beispiel aus der Anlage 10 ausgeleitet bzw. zur weiteren Verwendung entnommen. Es ist denkbar, dass in der Anlage 10 noch weitere Behandlungsschritte an dem Synthesegas 32 vorgenommen werden, die hier nicht näher erläutert werden.

Im hier gezeigten Beispiel können die Reformer 18A, 18B in einem Wechselbetrieb betrieben werden, wobei jeweils einer der Reaktoren 18A, 18B zum thermischen Regenieren mit einem Rauchgas 34 beaufschlagt wird, dass im Zuge der Verfeuerung des Thermolysekokses 24 in dem Feuerungsreaktor 26 erzeugt wird. Nach erfolgter thermischer Regenerierung kann das Rauchgas 34 abgeleitet werden. Durch den Wechselbetrieb ist ein kontinuierlicher Betrieb der Anlage 10 ermöglicht.

Im hier dargestellten Beispiel kann das Wärmeträgermaterial 30 aus seinem jeweiligen Reformer 18A, 18B heraus zu einem Staubabscheider 36A, 36B ausgeleitet werden, wo es gereinigt und anschließend abgeführt oder in den Reformer 18A, 18B zurückgeführt werden kann.

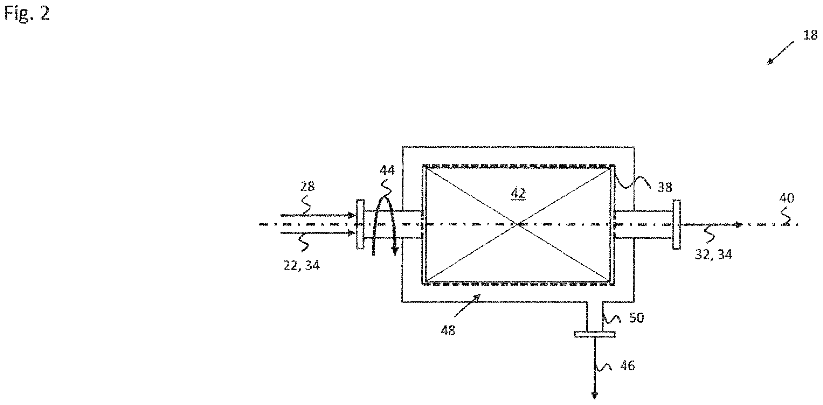

**Fig. 2** zeigt, unter Bezugnahme auf die in Zusammenhang mit Fig. 1 beschriebenen Komponenten und Verfahrensschritte, eine Detailansicht einer bevorzugten Ausführungsform eines Reformers 18 mit einer innerhalb des Reformers 18 angeordneten Separationseinrichtung 38. Die Separationseinrichtung 38 weist in der hier dargestellten Ausführungsform eine um eine Drehachse 40 drehbare Siebtrommel 42 auf, die zumindest einen Teil des Wärmeträgermaterials 30 aufnehmen kann. Durch eine Drehung 44 der Siebtrommel 42 kann das Wärmeträgermaterial 30 derart in der Siebtrommel 42 bewegt werden, dass an ihm anhaftende Materialpartikel 46 von dem Wärmeträgermaterial 30 abgetrennt und in einen die Siebtrommel 42 umgebenden Außenraum 48 überführt werden können. Dort sind sie für eine Austragsvorrichtung 50 zum Austrag aus dem Reformer 18 bereitgestellt.

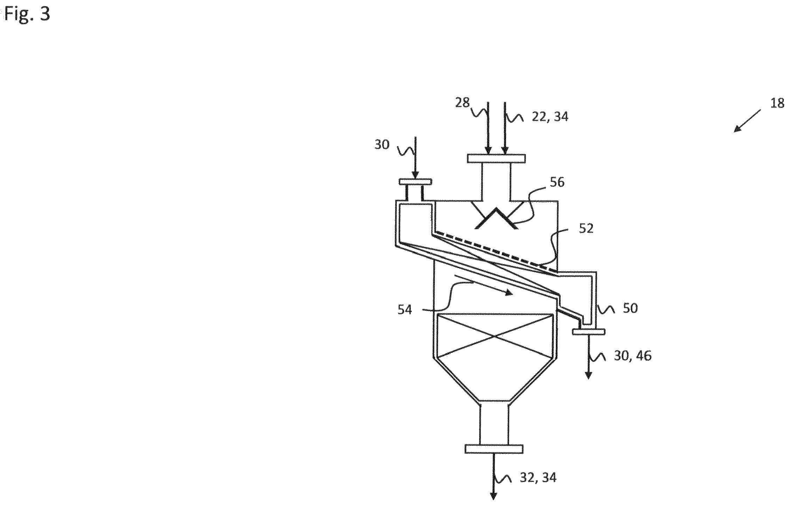

**Fig. 3** zeigt, unter Bezugnahme auf die im Zusammenhang mit den Figuren 1 und 2 benannten und beschriebenen Komponenten, eine weitere bevorzugte Ausführungsform eines Reformers 18 mit einer streckenweise innerhalb des Reformers 18 verlaufenden Förderstrecke 52 zum Transport zumindest eines Teils des Wärmeträgermaterials 30 entlang eines durch den Reformer 18 verlaufenden Transportpfades 54.

Das hier gezeigte Beispiel zeigt eine Strömungsleiteinheit 56, die beispielsweise als ein Lenkblech oder eine Düse ausgestaltet und dazu ausgebildet sein kann, einen in den Reformer 18 eintretenden Thermolysegasstrom 22 derart auf die Förderstrecke 52 auszurichten, dass bei dem Transport des Wärmeträgermaterials 30 entlang des Transportpfades 54 in dem Thermolysegasstrom 22 mitgeführte Materialpartikel 46 auf das Wärmeträgermaterial 30 übertragen werden. Das derart mit den Materialpartikeln 46 beaufschlagte Wärmeträgermaterial 30 wird gemäß dem hier gezeigten Beispiel nach Passieren der Förderstrecke 52 der Austragsvorrichtung 50 zum Austrag aus dem Reformer 18 bereitgestellt.

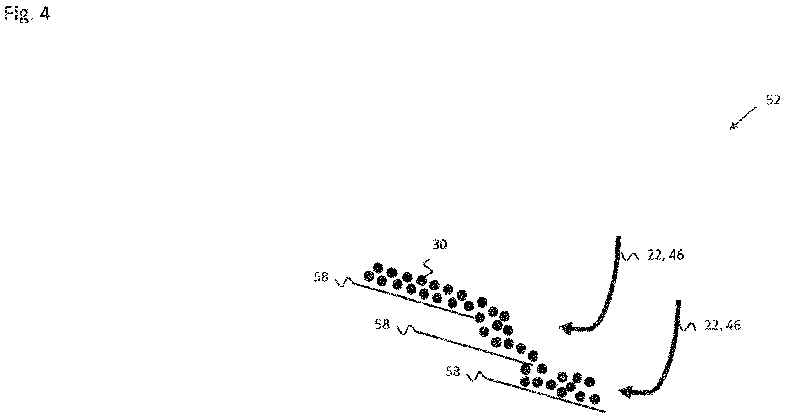

**Fig. 4** zeigt einen bevorzugten Aufbau der Förderstrecke 52 der Fig. 3. Hierbei weist die Förderstrecke 52 einander dachziegelartig überlappende Segmente 58 auf, die den Thermolysegasstrom 22 derart umlenken können, dass eine vorbestimmte Menge der mitgeführten Materialpartikel 46 auf das Wärmeträgermaterial 30, hier als Kügelchen dargestellt, übertragen wird.

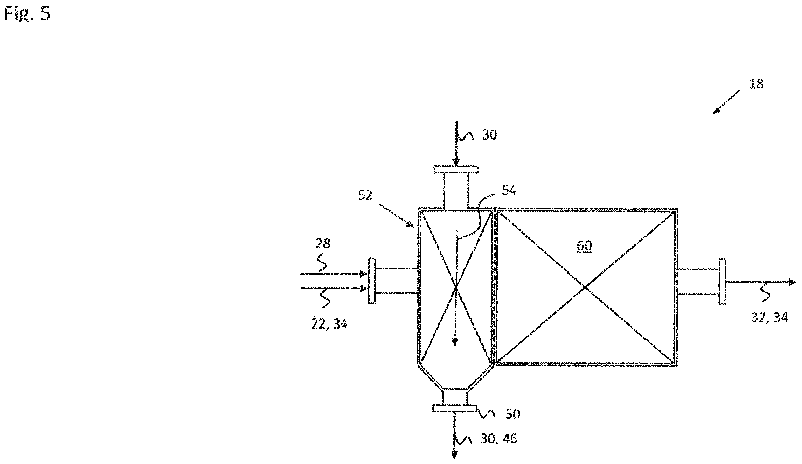

**Fig. 5** zeigt eine weitere bevorzugte Ausführungsform eines Reformers 18 mit einer Synthesekammer 60. Es wird insbesondere auf die Beschreibung der Fig. 3 verwiesen. Das in Fig. 5 gezeigte Ausführungsbeispiel stellt eine besondere Ausführungsform der in Zusammenhang mit Fig. 3 beschriebenen Förderstrecke 52 und des Transportpfads 54 dar. Hier verläuft der Transportpfad 54 im Wesentlichen senkrecht zu einer Einströmrichtung des Thermolysegases 22 in den Reformer 18. Das Thermolysegas 22 tritt zunächst in die Förderstrecke 52, hier in Form einer Förderkammer, ein und trifft dort in einer Kreuzströmung auf das in der Förderkammer befindliche Wärmeträgermaterial 30. Das Thermolysegas wird im Kontakt mit dem Wärmeträgermaterial 30 von mitgeführten Materialpartikeln 46 gereinigt. Das in der Förderkammer befindliche Wärmeträgermaterial 30 bildet demnach eine Opferschicht bzw. einen Schüttschichtfilter. Danach tritt das gereinigte Thermolysegas 22 in die Synthesekammer 18 ein, wo die eigentliche Reformierung zu dem Synthesegas 32 stattfindet, während das verschmutzte Wärmeträgermaterial 30 der Austragsvorrichtung 50 zugeleitet und aus dem Reformer 18, genauer aus der Förderkammer, ausgetragen wird. Das Wärmeträgermaterial 30 kann außerhalb der Förderkammer gereinigt und anschließend in die Förderkammer rückgeführt werden.

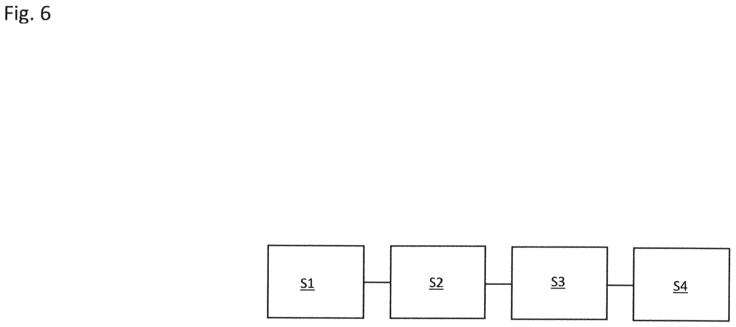

**Fig. 6** zeigt eine schematische Darstellung einer Ausführungsform des erfindungsgemäßen Verfahrens zum Betreiben einer Anlage 10 zur Erzeugung eines Synthesegases 32. In einem Verfahrensschritt S1 wird ein Thermolysereaktor 16 der Anlage 10 befeuert oder auf Betriebstemperatur gebracht und es wird ihm ein Einsatzstoff 20 zugeführt, welcher sodann in dem Thermolysereaktor 16 zu einem Thermolysegas 22 und einem Thermolysekoks 24 aufgespalten wird. Das Thermolysegas 22 wird daraufhin einem Reformer 18 der Anlage 10 zugeführt.

In einem Verfahrensschritt S2 wird dem Thermolysegas 22 ein Reformiermedium 28 beigemischt. Dies kann noch außerhalb des Reformers 18 geschehen. In dem Reformer 18 befindet sich ein Wärmeträgermaterial 30, das zuvor in einen Aufnahmebereich des Reformers 18 eingefüllt wurde.

In einem Verfahrensschritt S3 wird nun das Thermolysegas 22 mit dem Reformiermedium 28 in dem Reformer 18 unter Einsatz thermischer Energie, die durch das Wärmeträgermedium 30 zur Verfügung gestellt wird, zu einem Synthesegas 32 umgesetzt. Im Zuge dessen wird das Wärmeträgermaterial 30 mit Materialpartikeln 46 aus dem Thermolysegas 22 beaufschlagt. Die Materialpartikel 46 bilden Materialablagerungen an dem Wärmeträgermaterial 30.

In einem Verfahrensschritt S4 werden die Materialpartikel 46 und/oder die Materialablagerungen im Betrieb durch eine Austragsvorrichtung 50 der Anlage 10 aus dem Reformer 18 ausgetragen.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

Insgesamt stellt die Erfindung eine Möglichkeit bereit, eine Anlage zur Erzeugung eines Synthesegases im Betrieb von Materialablagerungen zu befreien und so die Stillstandszeiten der Anlage zu verringern.

### Bezugszeichenliste

- 10: Anlage
- 12: erste Reaktorstufe
- 14: zweite Reaktorstufe
- 16: Thermolysereaktor
- 18A, 18B: erster, zweiter Reformer
- 20: Einsatzstoff
- 22: Thermolysegas
- 24: Thermolysesubstanz
- 26: Feuerungsreaktor
- 28: Reformiermedium
- 30: Wärmeträgermaterial
- 32: Synthesegas
- 34: Rauchgas
- 36A, 36B: erster, zweiter Staubabscheider
- 38: Separationseinrichtung
- 40: Drehachse
- 42: Siebtrommel
- 44: Drehung
- 46: Materialpartikel
- 48: Außenraum
- 50: Austragsvorrichtung
- 52: Förderstrecke
- 54: Transportpfad
- 56: Strömungsleiteinheit
- 58: Segmente

## Patentansprüche

1. Anlage (10) zur Erzeugung eines Synthesegases (32) aus einem Einsatzstoff (20), wobei die Anlage (10) aufweist:
eine erste Reaktorstufe (12) mit zumindest einem Thermolysereaktor (24), der dazu ausgebildet ist, den Einsatzstoff (20) unter Aufspaltung in ein Thermolysegas (22) und eine Thermolysesubstanz (24) thermisch zu zersetzen;
eine zweite Reaktorstufe (14) mit zumindest einem Reformer (18), der zumindest abschnittsweise mit einem Wärmeträgermaterial (30) befüllt und dazu ausgebildet ist, das Thermolysegas (22) von dem zumindest einen Thermolysereaktor (24) zu empfangen und in einem Reformierbetrieb unter Einsatz einer von dem Wärmeträgermaterial (30) bereitgestellten thermischen Energie mit einem Reformiermedium (28) zu dem Synthesegas (32) umzusetzen, wobei in dem Reformierbetrieb in dem Thermolysegas (22) mitgeführte Materialpartikel (46) als Materialablagerungen auf das Wärmeträgermaterial (30) übertragen werden;
eine Austragsvorrichtung (50), die dazu ausgebildet ist, die Materialpartikel (46) und/oder die Materialablagerungen im Betrieb aus dem zumindest einen Reformer (18) auszutragen; und
eine Separationseinrichtung (38), die dazu ausgebildet ist, zumindest einen Teil der Materialablagerungen innerhalb des zumindest einen Reformers (18) von dem Wärmeträgermaterial (30) zu trennen und als Materialpartikel (46) der Austragsvorrichtung (50) zum Austrag aus dem zumindest einen Reformer (18) bereitzustellen.

2. Anlage (10) nach Anspruch 1, wobei die Separationseinrichtung (38) eine um eine Drehachse (40) drehbare Siebtrommel (42) aufweist, die dazu ausgebildet ist, zumindest einen Teil des Wärmeträgermaterials (30) aufzunehmen und durch Drehung (44) der Siebtrommel (42) um die Drehachse (40) derart zu bewegen, dass die Materialablagerungen durch die Bewegung des Wärmeträgermaterials (30) in der Siebtrommel (42) von dem Wärmeträgermaterial (30) getrennt werden und als Materialpartikel (46) durch Sieböffnungen der Siebtrommel (42) hindurch in einen die Siebtrommel (42) zumindest abschnittsweise umgebenden Außenraum (48) überführt werden.

3. Anlage (10) nach einem der vorhergehenden Ansprüche, aufweisend eine Fördereinrichtung, die dazu ausgebildet ist, zumindest einen Teil der Materialablagerungen gemeinsam mit dem Wärmeträgermaterial (30) der Austragsvorrichtung (50) zum Austrag aus dem zumindest einen Reformer (18) bereitzustellen.

4. Anlage (10) nach Anspruch 3, wobei die Fördereinrichtung eine Förderstrecke (52) zum Transport zumindest eines Teils des Wärmeträgermaterials (30) entlang eines durch den zumindest einen Reformer (18) verlaufenden Transportpfades (54) für das Wärmeträgermaterial (30) aufweist, wobei die Anlage (10) dazu ausgebildet ist, das Thermolysegas (22) als Thermolysegasstrom mittels einer Strömungsleiteinheit (56) derart auf die Förderstrecke (52) auszurichten, dass bei dem Transport des Wärmeträgermaterials (30) entlang des Transportpfades (54) in dem Thermolysegas (22) mitgeführte Materialpartikel (46) auf das Wärmeträgermaterial (30) übertragen werden.

5. Anlage (10) nach Anspruch 4, wobei die Strömungsleiteinheit (56) dazu ausgebildet ist, den Thermolysegasstrom in Abhängigkeit von einer Zusammensetzung des Thermolysegases (22) und/oder von einer Geometrie des zumindest einen Reformers (18) derart einzustellen, dass eine vorbestimmte Menge der Materialpartikel (46) auf das entlang der Förderstrecke (52) transportierte Wärmeträgermaterial (30) übertragen wird.

6. Anlage (10) nach einem der Ansprüche 4 oder 5, wobei die Förderstrecke (52) einander dachziegelartig überlappende Segmente (58) zur Strömungsumlenkung des Thermolysegasstroms aufweist.

7. Anlage (10) nach einem der vorhergehenden Ansprüche, aufweisend zumindest einen weiteren Reformer (18), wobei die Reformer (18A, 18B) dazu ausgebildet sind, in einem Wechselbetrieb in dem Reformierbetrieb und in einem Regenerierbetrieb zum thermischen Regenerieren betrieben zu werden, wobei die Austragsvorrichtung (50) dazu ausgebildet ist, die Materialpartikel (46) und/oder die Materialablagerungen aus dem jeweils im Reformierbetrieb und/oder aus dem jeweils im Regenerierbetrieb betriebenen Reformer (18) auszutragen.

8. Anlage (10) nach Anspruch 7, aufweisend eine Steuervorrichtung, die dazu ausgebildet ist, den Wechselbetrieb zu koordinieren und die Austragsvorrichtung (50) gemäß einem vorbestimmten Reinigungsplan und/oder in Abhängigkeit von zumindest einem Betriebszustand zumindest eines der Reformer (18A, 18B) anzusteuern und einem der Reformer (18A, 18B) für dessen Reinigung zuzuweisen.

9. Anlage (10) nach Anspruch 8, aufweisend zumindest drei Reformer (18), wobei zumindest einer der Reformer (18) als Stand-by-Reformer betrieben und erst dann in den Wechselbetrieb eingebunden wird, wenn die Steuervorrichtung zumindest einem der bereits in den Wechselbetrieb eingebundenen Reformer (18) die Austragsvorrichtung (50) für dessen Reinigung zugewiesen hat.

10. Verfahren zum Betreiben einer Anlage (10) zur Erzeugung eines Synthesegases (32) aus einem Einsatzstoff (20) gemäß einem der vorhergehenden Ansprüche, aufweisend:
eine erste Reaktorstufe (12) mit zumindest einem Thermolysereaktor (16);
eine zweite Reaktorstufe (14) mit zumindest einem Reformer (18); und
eine Austragsvorrichtung (50); wobei
in dem Thermolysereaktor (16) der Einsatzstoff (20) unter Aufspaltung in ein Thermolysegas (22) und eine Thermolysesubstanz (24) thermisch zersetzt wird;
der zumindest eine Reformer (18) zumindest abschnittsweise mit einem Wärmeträgermaterial (30) befüllt wird;
in dem zumindest einen Reformer (18) das Thermolysegas (22) aus dem zumindest einen Thermolysereaktor (16) empfangen und in einem Reformierbetrieb unter Einsatz einer von dem Wärmeträgermaterial (30) bereitgestellten thermischen Energie mit einem Reformiermedium (28) zu dem Synthesegas (32) umgesetzt wird;
in dem Reformierbetrieb in dem Thermolysegas (22) mitgeführte Materialpartikel (46) auf das Wärmeträgermaterial (30) übertragen werden und dort Materialablagerungen bilden; und
durch die Austragsvorrichtung (50) die Materialpartikel (46) und/oder die Materialablagerungen im Betrieb aus dem zumindest einen Reformer (18) ausgetragen werden.

## Claims

1. Plant (10) for generating a synthesis gas (32) from a feedstock (20), the plant (10) comprising:
a first reactor stage (12) having at least one thermolysis reactor (24) which is designed to thermally decompose the feedstock (20) with splitting into a thermolysis gas (22) and a thermolysis substance (24);
a second reactor stage (14) with at least one reformer (18), which can be filled at least in sections with a heat transfer material (30) and is designed to receive the thermolysis gas (22) from the at least one thermolysis reactor (24) and to convert it with a reforming medium (28) into the synthesis gas (32) in a reforming operation using a thermal energy provided by the heat transfer material (30), wherein material particles (46) entrained in the thermolysis gas (22) can be transferred as material deposits to the heat transfer material (30) in the reforming operation;
a discharge device (50) configured to discharge the material particles (46) and/or the material deposits from the at least one reformer (18) in operation; and
a separation device (38) configured to separate at least some of the material deposits within the at least one reformer (18) from the heat transfer material (30) and to provide them as material particles (46) to the discharge device (50) for discharge from the at least one reformer (18).

2. The system (10) according to claim 1, wherein the separation device (38) has a screen drum (42) which is rotatable about an axis of rotation (40) and is designed to receive at least part of the heat transfer material (30) and to move it about the axis of rotation (40) by rotating (44) the screen drum (42) in such a way that the material deposits are separated from the heat transfer material (30) by the movement of the heat transfer material (30) in the screen drum (42) and are transferred as material particles (46) through screen openings of the screen drum (42) into an outer space (48) surrounding the screen drum (42) at least in sections.

3. The system (10) according to any one of the preceding claims, comprising a conveying device configured to provide at least some of the material deposits together with the heat transfer material (30) of the discharge device (50) to the discharge device for discharge from the at least one reformer (18).

4. The system (10) according to claim 3, wherein the conveying device has a conveying section (52) for transporting at least a part of the heat transfer material (30) along a transport path (54) for the heat transfer material (30) running through the at least one reformer (18), wherein the system (10) is designed to align the thermolysis gas (22) as a thermolysis gas stream with the conveying section (52) by means of a flow guide unit (56) in such a way that material particles (46) carried along in the thermolysis gas (22) during the transport of the heat transfer material (30) along the transport path (54) are transferred to the heat transfer material (30).

5. The system (10) according to claim 4, wherein the flow guide unit (56) is configured to adjust the thermolysis gas flow in dependence on a composition of the thermolysis gas (22) and/or on a geometry of the at least one reformer (18) such that a predetermined amount of the material particles (46) is transferred to the heat transfer material (30) transported along the conveying path (52).

6. The system (10) according to one of Claims 4 or 5, wherein the conveying section (52) has segments (58) overlapping one another in the manner of roof tiles for deflecting the flow of the thermolysis gas stream.

7. The system (10) according to any one of the preceding claims, comprising at least one further reformer (18), wherein the reformer (18A, 18B) is designed to be operated in alternating operation in the reforming operation and in a regeneration operation for thermal regeneration, wherein the discharge device (50) is designed to discharge the material particles (46) and/or the material deposits from the reformer (18) operated in the reforming operation and/or from the reformer (18) operated in the regeneration operation.

8. The system (10) according to claim 7, comprising a control device that is configured to coordinate the alternating operation and to control the discharge device (50) according to a predetermined cleaning plan and/or depending on at least one operating state of at least one of the reformers (18A, 18B) and to assign it to one of the reformers (18A, 18B) for its cleaning.

9. The system (10) according to claim 8, comprising at least three reformers (18), wherein at least one of the reformers (18) is operated as a standby reformer and is only integrated into the alternating mode when the control device has assigned the discharge device (50) to at least one of the reformers (18) already integrated into the alternating mode for its cleaning.

10. A method of operating a plant (10) for generating a synthesis gas (32) from a feedstock (20) according to any one of the preceding claims, comprising:
a first reactor stage (12) having at least one thermolysis reactor (16);
a second reactor stage (14) having at least one reformer (18); and
a discharge device (50);
wherein in the thermolysis reactor (16), the feedstock (20) is thermally decomposed with splitting into a thermolysis gas (22) and a thermolysis substance (24);
the at least one reformer (18) is filled at least in sections with a heat transfer material (30);
in the at least one reformer (18), the thermolysis gas (22) is received from the at least one thermolysis reactor (16) and converted with a reforming medium (28) into the synthesis gas (32) in a reforming operation using a thermal energy provided by the heat transfer material (30);
material particles (46) entrained in the thermolysis gas (22) in the reforming operation are transferred to the heat transfer material (30) and form material deposits there; and
the material particles (46) and/or the material deposits are discharged from the at least one reformer (18) by the discharge device (50) during operation.

## Revendications

1. Installation (10) de production d'un gaz de synthèse (32) à partir d'une matière de charge (20), dans laquelle l'installation (10) présente :
un premier étage de réacteur (12) avec au moins un réacteur de thermolyse (24), qui est réalisé pour décomposer thermiquement la matière de charge (20) en un gaz de thermolyse (22) et en une substance de thermolyse (24) par craquage ;
un deuxième étage de réacteur (14) avec au moins un reformeur (18), qui est rempli au moins par endroits d'un matériau caloporteur (30) et est réalisé pour recevoir le gaz de thermolyse (22) de l'au moins un réacteur de thermolyse (24) et le convertir en le gaz de synthèse (32), dans un mode de reformage, avec un agent de reformage (28) en utilisant une énergie thermique fournie par le matériau caloporteur (30), dans lequel dans le mode de reformage, des particules de matériau (46) entraînées dans le gaz de thermolyse (22) sont appliquées sur le matériau caloporteur (30) sous la forme de dépôts de matériau ;
un dispositif d'évacuation (50), qui est réalisé pour évacuer les particules de matériau (46) et/ou les dépôts de matériau en fonctionnement hors de l'au moins un reformeur (18) ; et
un système de séparation (38), qui est réalisé pour séparer du matériau caloporteur (30) au moins une partie des dépôts de matériau à l'intérieur de l'au moins un reformeur (18) et pour le fournir en tant que particules de matériau (46) au dispositif d'évacuation (50) pour l'évacuation hors de l'au moins un reformeur (18).

2. Installation (10) selon la revendication 1, dans laquelle le système de séparation (38) présente un tambour de criblage (42) pouvant tourner autour d'un axe de rotation (40), qui est réalisé pour recevoir au moins une partie du matériau caloporteur (30) et la déplacer par rotation (44) du tambour de criblage (42) autour de l'axe de rotation (40) de telle manière que les dépôts de matériau sont séparés du matériau caloporteur (30) dans le tambour de criblage (42) par le déplacement du matériau caloporteur (30) et sont transférés sous forme de particules de matériau (46) dans un espace extérieur (48) entourant au moins par endroits le tambour de criblage (42) à travers des ouvertures de criblage du tambour de criblage (42) de part en part.

3. Installation (10) selon l'une quelconque des revendications précédentes, présentant un système de convoyage, qui est réalisé pour fournir au moins une partie des dépôts de matériau conjointement avec le matériau caloporteur (30) au dispositif d'évacuation (50) pour l'évacuation hors de l'au moins un reformeur (18).

4. Installation (10) selon la revendication 3, dans laquelle le système de convoyage présente un tronçon de convoyage (52) destiné à transporter au moins une partie du matériau caloporteur (30) le long d'un trajet de transport (54) s'étendant à travers l'au moins un reformeur (18) pour le matériau caloporteur (30), dans laquelle l'installation (10) est réalisée pour orienter le gaz de thermolyse (22) en tant que flux de gaz de thermolyse au moyen d'une unité d'acheminement d'écoulement (56) de telle manière sur le tronçon de convoyage (52) que lors du transport du matériau caloporteur (30) le long du trajet de transport (54), des particules de matériau (46) entraînées dans le gaz de thermolyse (22) sont appliquées sur le matériau caloporteur (30).

5. Installation (10) selon la revendication 4, dans laquelle l'unité d'acheminement d'écoulement (56) est réalisée pour régler le flux de gaz de thermolyse en fonction d'une composition du gaz de thermolyse (22) et/ou d'une géométrie de l'au moins un reformeur (18) de telle manière qu'une quantité prédéfinie des particules de matériau (46) est appliquée sur le matériau caloporteur (30) transporté le long du tronçon de convoyage (52).

6. Installation (10) selon l'une quelconque des revendications 4 ou 5, dans laquelle le tronçon de convoyage (52) présente des segments (58) se chevauchant à la manière de tuiles de toit destinés à la redirection de l'écoulement du flux de gaz de thermolyse.

7. Installation (10) selon l'une quelconque des revendications précédentes, présentant au moins un autre reformeur (18), dans laquelle les reformeurs (18A, 18B) sont réalisés pour fonctionner dans un mode de changement dans le mode de reformage et dans un mode de régénération pour la régénération thermique, dans laquelle le dispositif d'évacuation (50) est réalisé pour évacuer les particules de matériau (46) et/ou les dépôts de matériau hors du reformeur (18) fonctionnant respectivement dans le mode de reformage et/ou hors du reformeur fonctionnant respectivement dans le mode de régénération.

8. Installation (10) selon la revendication 7, présentant un dispositif de commande, qui est réalisé pour coordonner le mode de changement et pour piloter le dispositif d'évacuation (50) selon un plan de nettoyage prédéfini et/ou en fonction d'au moins un état de fonctionnement d'au moins un des reformeurs (18A, 18B) et l'attribuer à un des reformeurs (18A, 18B) pour son nettoyage.

9. Installation (10) selon la revendication 8, présentant au moins trois reformeurs (18), dans laquelle au moins un des reformeurs (18) fonctionne en tant que reformeur d'attente puis est intégré dans le mode de changement lorsque le dispositif de commande a attribué le dispositif d'évacuation (50) au moins à un reformeur (18) déjà intégré dans le mode de changement pour son nettoyage.

10. Procédé destiné à faire fonctionner une installation (10) de production d'un gaz de synthèse (32) à partir d'une matière de charge (20) selon l'une quelconque des revendications précédentes, présentant :
un premier étage de réacteur (12) avec au moins un réacteur de thermolyse (16) ;
un deuxième étage de réacteur (14) avec au moins un reformeur (18) ; et
un dispositif d'évacuation (50) ; dans lequel la matière de charge (20) est décomposée thermiquement dans le réacteur de thermolyse (16) en un gaz de thermolyse (22) et en une substance de thermolyse (24) par craquage ;
l'au moins un reformeur (18) est rempli au moins par endroits d'un matériau caloporteur (30) ;
le gaz de thermolyse (22) provenant de l'au moins un réacteur de thermolyse (16) est reçu dans l'au moins un reformeur (18) et est converti en le gaz de synthèse (32) avec un agent de reformage (28) dans un mode de reformage en utilisant une énergie thermique fournie par le matériau caloporteur (30) ;
des particules de matériau (46) entraînées dans le gaz de thermolyse (22) dans le mode de reformage sont appliquées sur le matériau caloporteur (30) et y forment des dépôts de matériau ; et
les particules de matériau (46) et/ou les dépôts de matériau sont évacués par le dispositif d'évacuation (50) lors du fonctionnement hors de l'au moins un reformeur (18) .
